# FASCICULE DE BREVET EUROPEEN

(11) **EP 1 145 753 B1**
(45) Date de publication et mention de la délivrance du brevet: **12.12.2007**
(21) Numéro de dépôt: 01400876.7
(22) Date de dépôt: 05.04.2001
(51) Int. Cl.: B01D 46/04, B01D 46/42

(54) **Installation de dépoussiérage de gaz par manches, filtrantes, comportant un dispositif pneumatique de décolmatage pérodique**
Einrichtung zur Gasentstaubung mittles Filtertaschen mit pneumatischer Vorrichtung zur periodichen Reinigung
Gas dedusting plant using filter bags including a pneumatic device for periodic cleaning

(30) Priorité: 11.04.2000 FR 0004626
(43) Date de publication de la demande: 17.10.2001
(73) Titulaire: SOLIOS Environnement, 78100 Saint-Germain-en-Laye (FR)
(72) Inventeur: Guibet, Jean-Pierre, 27920 St Pierre de Bailleul (FR)
(74) Mandataire: Bérogin, Francis

(56) Documents cités:
- EP-A- 0 269 810
- WO-A-01/54797
- US-A- 3 932 152
- US-A- 4 632 680

## Description

La présente invention concerne une installation de dépoussiérage de gaz par manches filtrantes, comportant une enceinte de filtrage divisée par une paroi interne de séparation en une chambre de gaz poussiéreux connectée à une conduite d'entrée et contenant un certain nombre de rangées de manches filtrantes, et en une chambre de gaz dépoussiérés connectée à une conduite d'évacuation, cette paroi de séparation étant percée de rangées correspondantes d'ouvertures de raccordement à l'embouchure desdites manches, lesquelles sont traversées de l'extérieur vers l'intérieur par les gaz à filtrer, les embouchures des manches débouchant ainsi dans ladite chambre de gaz dépoussiérés. Installations similaires sont décrites dans US-A-3935152 et WO 01/54797.

Cette installation comporte en outre, dans ladite chambre de gaz dépoussiérés, un dispositif pneumatique de décolmatage périodique et transitoire des manches, lequel comprend, vis-à-vis de chaque rangée d'ouvertures de la paroi interne de séparation, une rampe de décolmatage propre à être alimentée périodiquement par une arrivée d'air comprimé et comportant une rangée de buses, chacune disposée en regard d'une ouverture de ladite paroi pour diriger un jet sous pression vers l'intérieur des manches de sorte que la surface extérieure de ces dernières puisse être nettoyée ou décolmatée par des impulsions d'air comprimé issu des buses et traversant périodiquement lesdites manches à contre-courant des gaz à filtrer.

Habituellement les rampes de décolmatage sont constituées par des tubulures de distribution d'air comprimé, et les buses sont constituées par de simples trous, par de petits tubes servant à mieux orienter les jets d'air, ou encore par de petites buses en forme de venturis.

Le problème que la présente invention vise à résoudre se pose surtout lorsque l'installation comporte un grand nombre de manches par rangée, par exemple une quinzaine au moins, et où, par conséquent, les rampes sont de grande longueur, les espacements entre manches étant de l'ordre de 160 à 200 mm. Il peut se poser également quand il y a un élément de perturbateur en tête de rampe, par exemple un coude dans la conduite d'arrivée d'air. Dans ces cas il peut se produire à chaque phase transitoire de décolmatage (durée très courte, de l'ordre de ½ s ou moins) des ventres et des noeuds de pression dans la rampe, dont l'emplacement, difficile à prévoir, dépend de la géométrie de la rampe et qui ont pour effet que l'efficacité du décolmatage n'est pas la même pour toutes les manches associées à une même rampe, les buses de celle-ci ne fournissant pas toutes le même débit. On constate aussi, d'une façon générale, une tendance des buses placées à l'extrémité de rampe opposée à la conduite d'arrivée d'air, à débiter plus fortement que les buses placées à proximité de cette dernière.

Pour remédier à ce dernier inconvénient on a envisagé de percer dans les rampes de décolmatage des trous de soufflage de diamètres différents, décroissant en proportion de leur éloignement de la conduite d'arrivée d'air, mais ce palliatif n'est pas toujours suffisant.

Le but de la présente invention est de remédier aux inconvénients précités, et de faire en sorte que dans de telles installations le décolmatage soit rendu beaucoup plus homogène entre les différentes manches de chaque rangée, et que l'efficacité du décolmatage soit ainsi augmentée.

A cet effet, une installation conforme à l'invention, du type mentionné au début, est caractérisée en ce que lesdites buses sont constituées de tronçons tubulaires traversant la paroi de la rampe de décolmatage en venant en saillie sur une certaine longueur à l'intérieur de cette dernière, la section intérieure utile de ces tronçons étant choisie en fonction de leur emplacement dans la rampe, à savoir selon leur position suivant la longueur de la rampe ainsi que selon la position des noeuds et ventres de pression.

Le choix de la section des buses en fonction de leur position dans la rampe peut être fait après des essais pour chaque nouvelle géométrie de rampe installée, étant donné que la section la plus appropriée des buses de décolmatage dépend étroitement de cette géométrie.

Par l'expression « section intérieure utile » des tronçons, on entend indiquer que cette section pourra être uniforme, ou qu'une partie de la section intérieure du tronçon pourra être occupée par un objet plein, par exemple une barre axiale soudée au sommet du tronçon et réduisant la section de passage offerte au gaz de décolmatage, la section de cette barre pouvant d'ailleurs être variable.

Avantageusement, le diamètre extérieur desdits tronçons tubulaires est le même dans tout le dispositif de décolmatage, ce qui facilitera grandement la fabrication, notamment l'usinage des rampes et l'obtention de tronçons de tubes de diamètre standard.

Selon une disposition complémentaire de l'invention, on peut aussi prévoir que ladite longueur de la partie des tronçons en saillie à l'intérieur de la rampe est choisie après essais en fonction de leur emplacement dans cette rampe.

Selon encore une disposition avantageuse de la présente invention, pouvant se combiner aux précédentes, l'installation peut aussi être caractérisée en ce que l'extrémité desdits tronçons en saillie à l'intérieur de la rampe est biseautée sous un angle proche ou égal à 45°, l'embouchure ainsi inclinée desdits tronçons étant dirigée préférentiellement vers ladite arrivée d'air comprimé dans la rampe pour les tronçons situés à proximité de cette arrivée, et préférentiellement vers l'extrémité opposée de la rampe pour les tronçons situés à proximité de ladite extrémité opposée.

On obtient ainsi une large gamme de possibilités de réglage du débit dans les buses de décolmatage de la rampe, permettant, après quelques essais s'il s'agit d'une nouvelle géométrie de rampe, de rendre la plus homogène possible la pression de soufflage dans l'ensemble des manches de filtrage, augmentant par suite l'efficacité de l'ensemble de l'installation.

Un mode d'exécution de l'invention va maintenant être décrit à titre d'exemple nullement limitatif, avec référence aux figures du dessin ci-annexé dans lequel :
- la figure 1 est une vue schématique d'une installation conforme à l'invention ;
- la figure 2a est une vue de profil d'une buse de décolmatage biseautée et la figure 2b une vue de face en demi-coupe ; et
- les figures 3a et 3b sont des vues analogues d'une variante de réalisation.

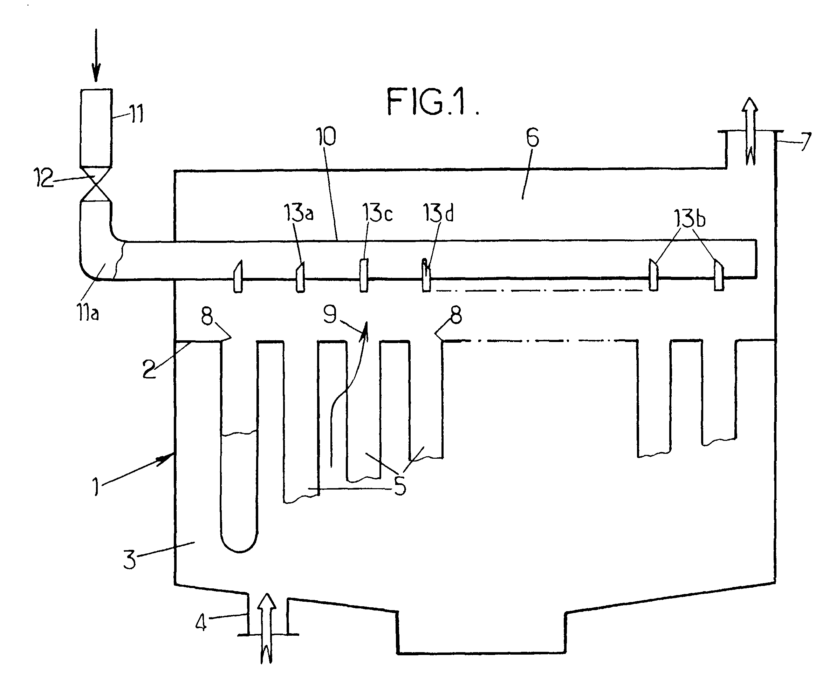

A la figure 1 on a représenté une installation comprenant une enceinte de filtrage 1 divisée par une paroi interne de séparation 2 en une chambre de gaz poussiéreux 3 connectée à une conduite d'entrée 4 et contenant un certain nombre de rangées de manches filtrantes 5, par exemple en tissu, et en une chambre 6 de gaz dépoussiérés connectée à une conduite d'évacuation 7. La paroi de séparation 2 est percée de rangées correspondantes d'ouvertures 8 de raccordement à l'embouchure des manches 5, lesquelles sont traversées de l'extérieur vers l'intérieur par les gaz à filtrer (flèche 9), les embouchures des manches débouchant ainsi dans ladite chambre 6 de gaz dépoussiérés.

L'installation comporte en outre, dans la chambre 6 de gaz dépoussiérés, un dispositif pneumatique de décolmatage transitoire et périodique des manches 5, lequel comprend, vis-à-vis de chaque rangée d'ouvertures 8 de la paroi interne 2 de séparation, une rampe de décolmatage 10 propre à être alimentée périodiquement par une arrivée d'air comprimé 11 reliée par exemple à un réservoir d'air sous pression. Cette arrivée 11, éventuellement coudée en 11a, est pourvue par exemple d'une vanne à commande électrique 12 ouverte automatiquement à intervalles de temps déterminés pour opérer le décolmatage transitoire et périodique des manches 5. La rampe 10 comporte une rangée de buses 13, chacune disposée en regard d'une ouverture 8 de la paroi interne 2 pour diriger un jet axial sous pression vers l'intérieur des manches 5, de sorte que la surface extérieure de ces dernières puisse être nettoyée ou décolmatée par des impulsions d'air comprimé traversant périodiquement ces manches à contre-courant des gaz à filtrer 9.

Conformément à l'invention, les buses 13 sont constituées de tronçons tubulaires traversant la paroi de la rampe 10 de décolmatage en venant en saillie sur une certaine longueur à l'intérieur de cette dernière, par exemple sur une hauteur d'environ 30mm, ainsi qu'à l'extérieur, par exemple sur une hauteur d'environ 60 mm, ces valeurs n'étant bien entendu données qu'à titre indicatif. La section intérieure utile de ces tronçons, c'est-à-dire leur épaisseur pour un diamètre extérieur donné, est choisie, par exemple après essais, en fonction de leur emplacement dans la rampe 10, à savoir selon leur position suivant la longueur de la rampe ainsi que selon la position des noeuds et ventres de pression observés lors d'essais préalables éventuels.

La longueur de la partie des tronçons 13 en saillie à l'intérieur de la rampe 10 peut être également choisie après essais en fonction de leur emplacement dans cette rampe, c'est-à-dire en rapport avec leur éloignement des extrémités de celle-ci, et être par conséquent variable.

Par contre et pour faciliter l'usinage de la rampe, le diamètre extérieur des buses 13 est de préférence constant et égal, par exemple, à un diamètre courant de 27 mm. Les buses 13 sont fixées sur la paroi de la rampe 10 par l'intermédiaire de par exemple deux, trois ou quatre points de soudure 14, pour éviter toute déformation de la rampe, l'étanchéité à ce niveau n'étant pas essentielle.

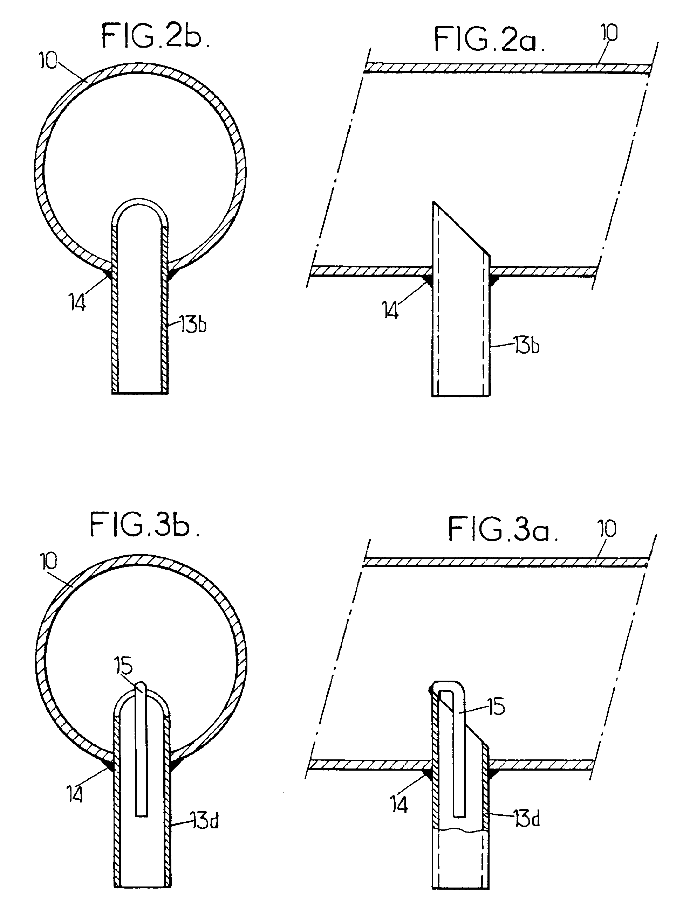

Comme visible sur la figure 1, certaines buses 13a sont biseautées vers l'entrée d'air pour augmenter leur débit lors du décolmatage, et d'autres, 13b, vers l'extrémité opposée de la rampe 10 pour diminuer au contraire leur débit, de telles buses étant montrées plus en détail aux figures 2a et 2b. L'inclinaison du biseau sur l'axe de la buse pourra être la même pour toutes les buses, par exemple 45°.

D'autres buses, telles que la buse référencée en 13c sur la figure 1, peuvent par contre être à extrémité non biseautée, notamment dans la partie médiane de la rampe 10.

Enfin on a montré en 13d sur les figures 3a et 3b des tronçons dont une partie de la section intérieure est occupée par un objet plein tel qu'une barre axiale 15 soudée au sommet du tronçon et réduisant la section de passage offerte à l'air de décolmatage dans certaines buses, la section de cette barre 15 pouvant être variable. Cela permet de régler le débit d'air dans ces buses, même si elles ont toutes la même section intérieure pour des raisons de commodité.

On dispose ainsi d'une large gamme de moyens permettant d'ajuster les débits de l'air de décolmatage fourni par les rampes 10 des différentes rangées pour que leur effet soit le même dans toutes les manches de l'installation.

## Revendications

1. Installation de dépoussiérage de gaz par manches filtrantes, comportant une enceinte de filtrage (1) divisée par une paroi interne de séparation (2) en une chambre de gaz poussiéreux (3) connectée à une conduited'entrée (4) et contentant un certain nombre de rangées de manches filtrantes (5), et en une chambre de gaz dépoussiérés (6) connectée à une conduite d'évacuation (7), cette paroi de séparation étant percée de rangées correspondantes d'ouvertures (8) de raccordement à l'embouchure desdites manches, lesquelles sont traversées de l'extérieur vers l'intérieur par les gaz à filtrer, les embouchures des manches débouchant ainsi dans ladite chambre de gaz dépoussiérés, cette installation comportant en outre, dans ladite chambre de gaz dépoussiérés, un dispositif pneumatique de décolmatage transitoire et périodique des manches, lequel comprend, vis-à-vis de chaque rangée d'ouvertures de la paroi interne de séparation, une rampe (10) de décolmatage propre à être alimentée périodiquement par une arrivée d'air comprimé et comportant une rangée de buses (13), chacune disposée en regard d'une ouverture de ladite paroi pour diriger un jet sous pression vers l'intérieur des manches de sorte que la surface extérieure de ces dernières puisse être nettoyée ou décolmatée par des impulsions d'air comprimé traversant périodiquement lesdites manches à contre-courant des gaz à filtrer, installation **caractérisée en ce que** lesdites buses (13) sont constituées de tronçons tubulaires traversant la paroi de la rampe (10) de décolmatage en venant en saillie sur une certaine longueur à l'intérieur de cette dernière, la section intérieure utile de ces tronçons étant choisie en fonction de leur emplacement dans la rampe (10), à savoir selon leur position suivant la longueur de la rampe ainsi que selon la position des noeuds et ventres de pression.

2. Installation selon la revendication 1, **caractérisée en ce que** le choix de la section des buses en fonction de leur position dans la rampe est fait après des essais pour chaque nouvelle géométrie de rampe installée.

3. Installation selon la revendication 1, ou 2, **caractérisée en ce qu'**une partie de la section intérieure desdits tronçons (13d) est occupée par un objet plein tel qu'une barre axiale (15) soudée au sommet du tronçon et réduisant la section de passage offerte au gaz de décolmatage, la section de cette barre (15) pouvant être variable.

4. Installation selon l'une quelconque des revendications précédentes, **caractérisée en ce que** le diamètre extérieur desdits tronçons tubulaires (13) est le même dans tout le dispositif de décolmatage.

5. Installation selon l'une quelconque des revendications précédentes, **caractérisée en ce que** ladite longueur de la partie des tronçons (13) en saillie à l'intérieur de la rampe (10) est choisie après essais en fonction de leur emplacement dans cette rampe.

6. Installation selon l'une quelconque des revendications précédentes, **caractérisée en ce que** l'extrémité desdits tronçons (13a, 13b) en saillie à l'intérieur de la rampe est biseautée, l'embouchure ainsi inclinée desdits tronçons étant dirigée préférentiellement vers ladite arrivée d'air comprimé dans la rampe (10) pour les tronçons (13a) situés à proximité de cette arrivée, et préférentiellement vers l'extrémité opposée de la rampe pour les tronçons (13b) situés à proximité de ladite extrémité opposée.

7. Installation selon la revendication 6, **caractérisée en ce que** l'extrémité desdits tronçons (13a, 13b) en saillie à l'intérieur de la rampe (10) est biseautée sous un angle proche ou égal à 45°.

## Claims

1. Installation for removing dust from gases through filtering sleeves, comprising a filtering enclosure (1) divided by an internal separating wall (2) into a chamber for dusty gases (3) connected to an inlet pipe (4) and containing a certain number of rows of filtering sleeves (5), and a chamber for cleaned gases (6) connected to a discharge pipe (7), this separating wall being pierced with corresponding rows of openings (8) connecting to the mouth of said sleeves, which are traversed from the exterior to the interior by the gases to be filtered, the mouths of the sleeves thus debouching into said chamber for cleaned gases, this installation additionally comprising in said chamber for cleaned gases a pneumatic device for temporary and periodic unclogging of the sleeves, which comprises, facing each row of openings in the internal separating wall, an unclogging manifold (10) capable of being supplied periodically through an inlet with compressed air and comprising a row of nozzles (13), each disposed facing an opening in said wall to direct a jet under pressure towards the interior of the sleeves so that the external surface of the latter can be cleaned or unclogged by pulses of compressed air periodically passing through said sleeves against the flow of the gases to be filtered, said installation being **characterised in that** said nozzles (13) are constituted by tubular stubs passing through the wall of the unclogging manifold (10) and projecting by a certain length inside the latter, the useful internal section of these stubs being chosen as a function of their location in the manifold (10), namely according to their position over the length of the manifold and according to the position of the pressure nodes and antinodes.

2. Installation according to claim 1, **characterised in that** the choice of the section of the nozzles as a function of their position in the manifold is made after tests for each new installed manifold geometry.

3. Installation according to claim 1 or 2, **characterised in that** a portion of the internal section of said stubs (13d) is occupied by a solid object such as an axial bar (15) welded to the top of the stub and reducing the passage section offered to the gases for unclogging, the section of this bar (15) possibly being variable.

4. Installation according to any one of the preceding claims, **characterised in that** the outside diameter of said tubular stubs (13) is the same throughout the unclogging device.

5. Installation according to any one of the preceding claims, **characterised in that** said length of the portion of the stubs (13) projecting inside the manifold (10) is chosen after testing as a function of their location in this manifold.

6. Installation according to any one of the preceding claims, **characterised in that** the end of said stubs (13a, 13b) projecting inside the manifold is bevelled, the resulting inclined mouth of said stubs being preferably directed towards said inlet for compressed air in the manifold (10) for the stubs (13a) situated close to this inlet, and preferably towards the opposite end of the manifold for the stubs (13b) located near said opposite end.

7. Installation according to claim 6, **characterised in that** the end of said stubs (13a, 13b) projecting inside the manifold (10) is bevelled at an angle close to or equal to 45°.

## Patentansprüche

1. Einrichtung zum Entstauben von Gasen über Filterrohre, umfassend einen Filtrierraum (1), der durch eine innere Trennwand (2) in eine Kammer für staubhaltige Gase (3), die mit einer Einlassleitung (4) verbunden ist und einige Reihen von Filterrohren (5) enthält, und in eine Kammer für entstaubte Gase (6), die mit einer Abführleitung (7) verbunden ist, unterteilt ist, wobei diese Trennwand von entsprechenden Reihen von Öffnungen (8) zum Verbinden mit der Öffnung der Rohre durchbrochen ist, die von den zu filternden Gasen von außen nach innen durchströmt werden, wobei die Öffnungen der Rohre somit in die Kammer für entstaubte Gase münden, wobei diese Einrichtung ferner in der Kammer für entstaubte Gase eine pneumatische Vorrichtung zum vorübergehenden und periodischen Spülen der Rohre umfasst, die gegenüber jeder Reihe von Öffnungen der inneren Trennwand eine Spülverteilerleitung (10) umfasst, die geeignet ist, periodisch über eine Druckluftzufuhr beaufschlagt zu werden, und die eine Reihe von Düsen (13) umfasst, die jeweils gegenüber einer Öffnung der Wand angeordnet sind, um einen Strahl unter Druck in das Innere der Rohre zu leiten, so dass die Außenseite letzterer durch Druckluftimpulse, welche die Rohre im Gegenstrom zu den zu filternden Gasen periodisch durchströmen, gereinigt oder gespült werden kann, Einrichtung, die **dadurch gekennzeichnet ist, dass** die Düsen (13) von röhrenförmigen Abschnitten gebildet sind, welche die Wand der Spülverteilerleitung (10) durchgreifen und dabei über eine gewisse Länge im Inneren letzterer vorragen, wobei der nützliche Innenquerschnitt dieser Abschnitte in Abhängigkeit ihres Platzes in der Verteilerleitung (10), nämlich entsprechend ihrer Position entlang der Länge der Verteilerleitung sowie entsprechend der Position der Druckknoten und -bäuche gewählt ist.

2. Einrichtung nach Anspruch 1, **dadurch gekennzeichnet, dass** die Wahl des Querschnitts der Düsen in Abhängigkeit ihrer Position in der Verteilerleitung nach Versuchen für jede neue Geometrie einer installierten Verteilerleitung erfolgt.

3. Einrichtung nach Anspruch 1 oder 2, **dadurch gekennzeichnet, dass** ein Teil des Innenquerschnitts der Abschnitte (13d) von einem massiven Gegenstand, wie einem axialen Stab (15), eingenommen ist, der am Scheitel des Abschnittes angeschweißt ist und den den Spülgasen zur Verfügung stehenden Durchlassquerschnitt verringert, wobei der Querschnitt dieses Stabes (15) variabel sein kann.

4. Einrichtung nach irgendeinem der vorhergehenden Ansprüche, **dadurch gekennzeichnet, dass** der Außendurchmesser der röhrenförmigen Abschnitte (13) in der gesamten Spülvorrichtung der gleiche ist.

5. Einrichtung nach irgendeinem der vorhergehenden Ansprüche, **dadurch gekennzeichnet, dass** die Länge des innerhalb der Verteilerleitung (10) vorragenden Teils der Abschnitte (13) nach Versuchen in Abhängigkeit ihres Platzes in dieser Verteilerleitung gewählt wird.

6. Einrichtung nach irgendeinem der vorhergehenden Ansprüche, **dadurch gekennzeichnet, dass** das innerhalb der Verteilerleitung vorragende Ende der Abschnitte (13a, 13b) abgeschrägt ist, wobei die so geneigte Öffnung der Abschnitte für die in der Nähe der Druckluftzufuhr in der Verteilerleitung (10) befindlichen Abschnitte (13a) vorzugsweise in Richtung dieser Zufuhr ausgerichtet ist und für die in der Nähe des gegenüberliegenden Endes der Verteilerleitung befindlichen Abschnitte (13b) vorzugsweise in Richtung des genannten gegenüberliegenden Endes ausgerichtet ist.

7. Einrichtung nach Anspruch 6, **dadurch gekennzeichnet, dass** das innerhalb der Verteilerleitung (10) vorragende Ende der Abschnitte (13a, 13b) unter einem Winkel nahe oder gleich 45° abgeschrägt ist.
